# EUROPEAN PATENT APPLICATION

(11) **EP 4 653 178 A1**
(43) Date of publication of application: **26.11.2025**
(21) Application number: 25176248.0
(22) Date of filing: 14.05.2025
(51) Int. Cl.: B29C 64/124, B08B 3/12, B29C 64/336, B29C 64/35, B29C 64/393, B33Y 10/00, B33Y 40/00

(54) **MULTI-MATERIAL LIQUID BASED 3D PRINTING FOR FULL SHOE MANUFACTURING**

(30) Priority: 17.05.2024 DE 102024113875
(71) Applicant: adidas AG, 91074 Herzogenaurach (DE)
(72) Inventor: ZHAO, Meng, 91074 Herzogenaurauch (DE); NORRIDGE, Marc, 91074 Herzogenaurauch (DE); DREXLER, Maxilmilian, 91074 Herzogenaurauch (DE); LE, Tru, 91074 Herzogenaurauch (DE)
(74) Representative: Bardehle Pagenberg Partnerschaft mbB Patentanwälte Rechtsanwälte

(57) **Abstract**

A method of printing a three-dimensional object, comprises at least the steps of providing at least a first (11, 1211, 1411) and a second printing material (21, 1221, 1421) separated in at least a first (10, 310, 1210, 1410) and a second material tank (20, 320, 1220, 1420); providing a build platform (100, 200, 1200, 1400); a first printing step of printing the object at least partially onto the build platform with the first printing material; a cleaning step of cleaning the object from the first and/or second printing material; and a second printing step of printing the object at least partially onto the build platform with the second printing material.

## Description

### 1. Field of the invention

This invention relates to a method of printing a three-dimensional object by providing at least a first and a second printing material separated in at least a first and a second material tank.

### 2. Background

In the 3D printing industry, printing processes utilizing Digital Light Processing (DLP) and photopolymerization are often confined to use only one type of material per printing job, which limits the overall material use in traditional 3D printing. Parts printed from only one material often lack the functional and/or aesthetic requirements necessary in more complex applications. The printing methods that use multiple materials per printing jobs are often times cumbersome and costly, as these demand meticulous processing and assembly. Common 3D printing method also often create waste excess material, which is not just expensive, but also reduces manufacturing sustainability. A further drawback in the traditional printing method is the management of material residues remaining on the product and decrease the final products' quality.

It is overall disadvantageously with the common methods, that material use is limited, or the printing method is unnecessarily cumbersome and meticulous. Also, these methods create waste excess material and leave material residues on the product. Thus, there is a demand for an improved method of 3D printing.

In view of the foregoing, there is a need for an improved 3D printing method. It is thus an object of the present invention to overcome some or all the deficiencies of the prior art.

### 3. Summary

The above objects are at least partially achieved by the subject matter of independent claim 1. Preferred embodiments are the subject of the dependent claims, and the skilled person will find clues to other suitable aspects of the present invention in the overall disclosure of the present application.

An aspect of the invention relates to a method of printing a three-dimensional object, comprising at least the steps: providing at least a first and a second printing material separated in at least a first and a second material tank; providing a build platform; a first printing step of printing the object at least partially onto the build platform with the first printing material; a cleaning step of cleaning the object from the first and/or second printing material; and a second printing step of printing the object at least partially onto the build platform with the second printing material.

This method could be particularly useful in applications where different properties, such as color, strength, or thermal resistance, are needed in different parts of the finished object. For example, a manufacturer could use a flexible material for the core of a part and a more sturdy, colorful material for the outer layers to enhance aesthetic appeal and functionality. This method allows for high precision in multi-material 3D printing, reducing material waste and increasing the efficiency of the printing process by cleaning the object between steps, which helps maintain the quality and integrity of the finished product. A step of printing the object at least partially onto the build platform also comprises printing on a partially printed object that is attached to the build platform.

Another aspect of the invention is realized, when the cleaning step comprises at least the steps: providing one or more cleaning tanks with a cleaning solution; providing one or more air knifes; and providing one or more standing waves of cleaning solution; cleaning the object by exposing it to the one or more standing waves of cleaning solution; and drying the cleaned object by exposing it to the one or more air knifes.

Such a cleaning step offers a highly efficient way to ensure that each layer of the printed object is free from contamination before the next material is applied, which is important for maintaining the structural integrity and aesthetic quality of the final product. For instance, such thorough cleaning can prevent material mixing that might otherwise compromise functionality and/or aesthetics. The combination of standing waves and air knives provides a thorough and gentle cleaning, suited for complex shapes or delicate details.

Another aspect of the invention is achieved, when the cleaning step instead comprises at least the steps: providing one or more cleaning tanks with a cleaning solution, wherein at least one of the cleaning tanks is an ultrasonic cleaning tank, configured and dedicated for ultrasonic cleaning; and providing one or more air knifes; cleaning the object by immerging the object into the ultrasonic cleaning tank; and drying the cleaned object by exposing it to the one or more air knifes.

Such a cleaning step could be very beneficial in applications requiring high levels of purity and precision. Ultrasonic cleaning ensures thorough removal of residues and contaminants. This method not only enhances the structural and surface integrity of the printed object but also improves the bonding and layering of different materials in subsequent printing steps, as there is less contaminated material within the layers, thus leading to a higher quality and more reliable final product.

The method of printing a three-dimensional object can be further improved, when at least one of the material tanks and/or at least one of the cleaning tanks is horizontally movable.

This feature specifically enhances the efficiency and flexibility of the printing process. For example, in a large-scale manufacturing setting, where multiple objects or parts of an object need to be printed simultaneously or sequentially, the ability to move tanks horizontally can reduce the time taken to change materials or initiate cleaning cycles. This adaptability is especially advantageous in production lines that require rapid changes between different types of materials or frequent cleaning of objects. The mobility of the tanks could also lead to better space management within the printing facility, optimizing the overall workflow and reducing operational downtime.

Further improvement of the method is achieved, when the tanks are arranged on a rotatable disk.

Such an arrangement proves especially beneficial in environments where rapid production and high throughput are important. For example, in industrial applications where multiple colors or material properties are required within short production timelines, the rotatable disk enables a fast changeover between tanks, thus reducing downtime. Additionally, this method enhances the precision of the material handling process, ensuring that the correct material or cleaning solution is readily available at the exact time it is needed.

Such a method can be improved further, when at least one cleaning tank is arranged between the printing material tanks.

Such a configuration is advantageous in settings where multiple material properties are important to the product's functionality. The e.g., central placement of the cleaning tank helps maintain a high-quality print by ensuring that each material adheres properly without contamination from previous other materials. Additionally, this arrangement optimizes the workflow by minimizing the movement required between different stages of the printing process, leading to a faster production and reduced operational costs.

The method can be further improved, when the build platform is vertically and horizontally movable.

Such a vertically and horizontally movable build platform could be beneficial in the production of complex, multi-layered objects where precise layer alignment is needed for structural integrity and functional performance. This adaptability not only enhances the quality of the final product but also allows for the production of more complex geometries that might not be feasible with a fixed platform, thus expanding the capabilities of the 3D printing method.

This method is even more improved, when the build platform comprises a Stewart platform.

The incorporation of a Stewart platform is ideal for manufacturing contexts where great precision is required. The capability to finely tune the platform's orientation and position ensures that each layer of a 3D printed object adheres correctly and with the appropriate alignment relative to other layers, thus improving the structural integrity and functional precision of the final product. Additionally, such a configuration can accommodate complex printing trajectories and material deposition patterns, which are necessary for creating advanced geometries and structures with high performance and reliability.

Further improvement is achieved, when at least one of the printing materials is a liquid photopolymer resin.

Utilizing a liquid photopolymer resin is advantageous for applications requiring high detail and smooth surface finishes. The precision that can be achieved with photopolymer resins is superior to many other 3D printing materials, allowing for the creation of parts with complex geometries and fine features that would be difficult to achieve with more traditional materials. Furthermore, photopolymer resins can be formulated with various properties, including different colors, transparencies, and mechanical characteristics, enhancing the versatility and applicability of the 3D printing process across various industries.

Even further improved method is realized, when the printing utilizes Digital Light Processing (DLP).

Employing DLP in the 3D printing process is particularly beneficial for creating parts that require high-speed production without sacrificing detail and accuracy. The ability of DLP to cure entire layers simultaneously allows for faster creation of complex, high-resolution structures compared to other printing methods that require more time. Additionally, DLP technology can be optimized for use with a wide range of photopolymer resins, allowing for variations in material properties such as flexibility, strength, and opacity, thus expanding the scope and versatility of 3D printed applications.

Even more improvement is achieved when the printing is carried out by photopolymerization.

Utilizing photopolymerization in the 3D printing process offers distinct advantages for producing highly detailed and accurate parts. The ability to precisely control the light exposure allows for complex designs with smooth surfaces and intricate details that might not be achievable through more traditional manufacturing methods. Additionally, photopolymerization can be used with a range of different resins, each offering different mechanical and thermal properties, enabling the production of customized items tailored to specific functional requirements and environmental conditions.

Further improvements are obtained when the photopolymerization is enabled by UV light.

Utilizing UV light for photopolymerization in an e.g., DLP-based 3D printing system provides several advantages. Firstly, UV light can cure specific resins very quickly, enhancing the speed of the printing process, which is important in high-throughput production. Moreover, the use of UV light allows for very fine control over the curing process, enabling the production of parts with extremely fine details and high dimensional accuracy. This method also supports the use of a wide array of UV-curable resins, allowing for customization of material properties to fit specific applications.

Further improvement is achieved when the first and the second printing materials differ in their mechanical properties.

Such an approach can be especially advantageous when components often require areas of differing rigidity and flexibility within a single part to achieve optimal performance and safety. The ability to print with materials that have varied mechanical properties in a single printing session also enhances product design and innovation, allowing to produce parts that are both lightweight and durable, or rigid in some areas while elastic in others. This not only simplifies the manufacturing process by reducing the need for assembly of multiple parts but also opens new possibilities for designing products that are more complex and functionally integrated.

The method is further improved, when the first material has a Shore A hardness in the range 70 to 80.

A material with a Shore A hardness of 70 to 80 would be suitable for applications that require a balance between flexibility and structural strength. This level of hardness is suitable for parts which need to withstand physical stress and deformation without breaking. The use of such a material in 3D printing allows for creating parts that can endure bending and flexing while still maintaining their shape and integrity. This characteristic is particularly beneficial when components must frequently withstand dynamic stresses and yet provide reliable performance.

Even more improvement is obtained, when the first material has an elongation at break in the range 240 % to 360 %.

Such an elongation capacity makes the first material particularly suitable for producing parts that need to sustain extensive deformation under load without rupturing or parts subject to frequent stretching and compressing. The combination of a Shore A hardness of 70 to 80 with high elongation at break provides a material that is not only tough and resistant to tearing but also highly adaptable to dynamic mechanical conditions.

This can be furtherly improved, when the first material has a tear strength in the range 20 to 30 kN/m.

Combining moderate Shore A hardness (70 to 80), high elongation at break (240% to 360%), and substantial tear strength (20 to 30 kN/m) makes the first material suited for manufacturing parts that are exposed to harsh conditions. The material's properties ensure that such parts can perform reliably without failure, thus providing safety and longevity.

The method might also be improved, when the second material has a Shore D hardness in the range 68 to 74.

A second material with such a level of hardness is suited for applications requiring high structural integrity and resistance to mechanical stress and deformation. The combination of e.g., the first material's flexibility and the second material's hardness allows for the fabrication of composite objects that are both resilient and durable, optimizing performance across varied operational demands.

Further improvement is achieved, when the second material has tensile modulus in the range 1000 MPa to 1200 MPa.

Such a range of tensile modulus makes the second material suitable for structural applications where rigidity and the ability to bear loads without excessive deformation are important. These kinds of applications benefit from the material's high stiffness, ensuring that structural components maintain their shape and functionality under mechanical stress and contribute to the overall integrity and safety of the system. Such a material, with a Shore D hardness of 68 to 74 and a tensile modulus of 1000 to 1200 MPa, complements the more flexible first material, allowing for a balanced combination of properties in the final printed object.

Further improvement is obtained, when the second material has an elongation at break higher than 50 %.

Such a characteristic could make the second material suited for components that must endure both static and dynamic stresses. The combination of a Shore D hardness of 68 to 74, a tensile modulus in the range of 1000 to 1200 MPa, and an elongation at break above 50% provides a robust material profile, suitable for manufacturing parts that are expected to perform reliably under varying operational conditions. This ensures that the parts can support loads while also accommodating movements and minor deformations.

Examples of the first and second materials might include commonly known printing materials like EPU 43, EPU44, EPU 45, EPU 46, LOCTITE^{®} 3D IND405 Clear, RPU 70, UMA 90 and/ or other suitable materials. The choice of materials can also be dependent on the desired properties, e.g to achieve toughness and/or stiffness with Polyamides (PA) or to achieve varying hardness, elasticity and damping with thermoplastic Polyurethane (TPU).

To improve the method even further the filling level of the printing material in the material tank is controlled by a control means to maintain a constant filling level.

The ability to maintain a constant filling level in the material tanks is beneficial when printing large or complex structures. The control means might include sensors that monitor the material level and adjust it by adding material from a reserve when levels drop, or by stopping the addition when the optimal level is reached. This automated adjustment helps in achieving a high degree of precision in the final product, optimizing the use of materials, and reducing waste, thereby enhancing the overall efficiency and cost-effectiveness of the manufacturing process.

This can be further achieved, when the method comprises an estimation of a tank refill volume based on a volume of a printing layer.

Estimating the tank refill volume is advantageous for maintaining efficiency and material consistency in continuous or high-volume printing operations. Being able to accurately calculate and replenish the exact amount of material used per layer helps in avoiding both shortages, which can pause or stop the printing process, and overfills, which could lead to material wastage or spillage. This approach not only enhances the precision of the printing process but also optimizes material usage, reducing overall production costs and minimizing waste.

To improve this method more the filling level of the printing material in the material tank is controlled by a control means to be in the range of 0.5 mm to 4 mm, preferably in the range of 1 mm to 2 mm.

Maintaining such a filling level range is particularly important in applications requiring extreme precision and uniformity in material deposition. The specified range ensures that the printing mechanism always has optimal access to the material. Additionally, such precise control helps maintain consistent viscosity and temperature of the material. Through its enhanced control mechanism, such a method contributes to the reliability and efficiency of the printing process.

To improve this method even further the filling level of the printing material in the material tank is controlled by a control means to be at the minimum volume necessary for printing of one layer.

Such a method is beneficial for high-precision manufacturing processes where material efficiency and layer quality are paramount. Maintaining the minimum necessary volume for each layer minimizes the risk of material degradation due to prolonged exposure to environmental factors and reduces the overall material costs by avoiding excess usage. This approach not only enhances the sustainability of the printing process by conserving resources but also ensures that each layer is consistently printed with fresh material, which can improve the structural integrity and resolution of the final product. This material management helps achieving a high standard required in advanced manufacturing applications.

Further improvement of this method is achieved when the control means comprises an overflow dam.

Including an overflow dam is advantageous in 3D printing setups: by preventing overfilling, the overflow dam helps to maintain a consistent material flow to the printer head, which is necessary for achieving uniform layer deposition. Additionally, it aids in reducing material wastage by catching any excess that could otherwise spill or be wasted, thus improving the efficiency and cost-effectiveness of the printing process. An overflow dam might also help in maintaining a clean and controlled printing environment by containing spills and splashes, thus enhancing the operational reliability and maintenance ease of the printing equipment.

This method can be improved even further, when the control means comprises a non-contact fill level sensor, the sensor comprising an ultrasonic transducer and/or a laser.

Adding such kinds of sensor provides an improved printing setup, as by detecting the fill level with a non-contact sensor, the fill level surveillance can be seamlessly implemented int the printing setup. This way, the control means is enabled to control the filling level of a material tank to maintain a constant level.

Even further improvement of this method is achieved when the control means comprises a weight sensor.

Such a weight sensor enables another possibility of measuring the fill level of a material tank by knowing the total weight of the material inside the tank. This opens the opportunity to control the fill level even more precise.

Another part of the invention is a sports article manufactured according to the method.

The invention according to the method is suited to manufacture sports articles, as these often require the materials and manufacturing methods utilizing the foregoing parameters.

### 4. Brief description of the figures

In the following, preferred embodiments of the disclosure are disclosed by reference to the accompanying figures.
- Fig. 1:: illustrates the method according to the invention with a horizontally moveable build platform in a schematic view.
- Fig. 2:: depicts the method according to the invention with a printing container in a schematic view.
- Fig. 3:: shows the method according to the invention with a rotatable disk in a schematic view.
- Fig. 4:: illustrates a common method of printing a three-dimensional object with a high fill level.
- Fig. 5:: depicts the method according to the invention with a lower fill level.
- Fig. 6:: shows the method according to the invention with an overflow dam.
- Fig. 7:: illustrates a cleated shoe printed by a method according to the invention.
- Fig. 8:: depicts a shin guard printed by a method according to the invention.
- Fig. 9:: shows a shoe printed by a method according to the invention.
- Fig. 10:: illustrates a shoe sole printed by a method according to the invention.
- Fig. 11:: depicts a vertically integrated shoe sole printed by a method according to the invention.
- Fig. 12:: shows a method according to the invention, where a build platform passes a cleaning tank after a first printing step in a schematic view.
- Fig. 13:: illustrates the method of Figure 12, where the build platform passes the cleaning tank after a second printing step in a schematic view.
- Fig. 14:: depicts a method according to the invention, where the build platform passes an ultrasonic cleaning tank in a schematic view.

### 5. Detailed description of the figures

The subsequent sections provide a detailed description of the invention, referencing the accompanying illustrations for clarity. The descriptions represent examples only and are not intended to limit the invention's scope. Identical reference numerals across the figures and text denote the same components. The illustrations may not reflect actual size or scale; their dimensions, proportions, and depictions of elements might be enhanced for better understanding and visual convenience.

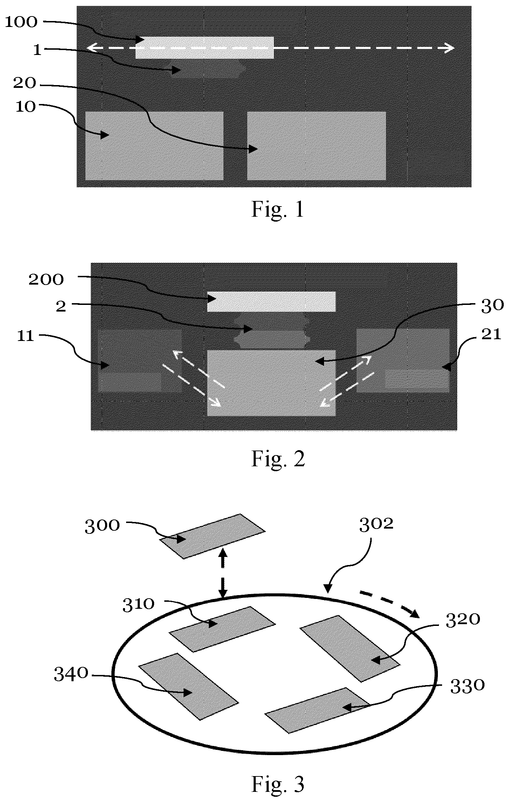

Figure 1 illustrates a printing setup according to the invention to print a three-dimensional object 1. The build platform 100 is movable in horizontal and vertical direction. The printed three-dimensional object 1 is printed on the bottom side of the build platform 100. A first material tank 10 and a second material tank 20 are supplied, the first material tank 10 containing a first printing material (not shown) and the second material tank 20 containing a second printing material (not shown). The build platform 100 can readily switch between the first material tank 10 and the second material tank 20 to print a three-dimensional object from different materials.

The build platform 100 can seamlessly alternate between these two tanks 10 and 20, enabling the integration of different materials into the three-dimensional object 1. This capability is particularly useful for creating complex objects that require varied material properties (e.g., hardness, flexibility, color and the like) at different sections of the final product. Such a setup allows for enhanced product functionality and aesthetic qualities by incorporating multiple materials into a single object without the need for manual intervention or assembly post-printing. This can significantly streamline the manufacturing process for multi-material items, where material properties can be optimized for specific functional zones within the object. In this embodiment, the printing materials could be liquid photopolymer resin. The printing could utilize Digital Light Processing (DLP). The printing could also be carried out by photopolymerization and the photopolymerization could be enabled by UV light.

Figure 2 depicts another printing setup according to the invention to print a three-dimensional object 1. The build platform 200 is movable in vertical direction. A printing container 30 is arranged below the build platform 200. The first printing material 11 and the second printing material 21 can be introduced into the printing container 30, depending on which printing material should be used to print a layer of the three-dimensional printing object.

The printing container 30 is designed to be able to hold both the first printing material 11 and the second printing material 21. These materials can be alternately introduced into the container based on the specific requirements of each layer of the three-dimensional object 2 being printed. This method allows for efficient switching between materials during the printing process, facilitating the creation of complex multi-material objects without the need to pause and manually change or mix materials. Such a setup could be particularly advantageous for producing layers with varying material properties in a continuous printing process.

In Figure 3, the build platform 300 is vertically moveable and arranged over a rotatable disk 300. The disk 302 can rotate in clockwise direction and contains a first material 310, a second material tank 320, a third material tank 330 and a cleaning tank 340. Depending on the rotational position of the disk 300, a different tank can be utilized for printing.

The rotatable disk 302 supports the operational flexibility of the setup, enabling the build platform 300 to access different materials or perform cleaning operations simply by rotating the disk to the desired position. This means that during the printing process, the build platform can align with any of the material tanks to deposit different materials as required by the design of a printed three-dimensional object or align with the cleaning tank to ensure the printed object or the platform itself is free from any residue before a new material is applied. Such a configuration is suited for manufacturing processes where products require the integration of multiple materials with differing properties. The inclusion of a cleaning tank within the same setup further is preventing cross-contamination between different material layers. In this embodiment, the tanks are arranged on a rotatable disk.

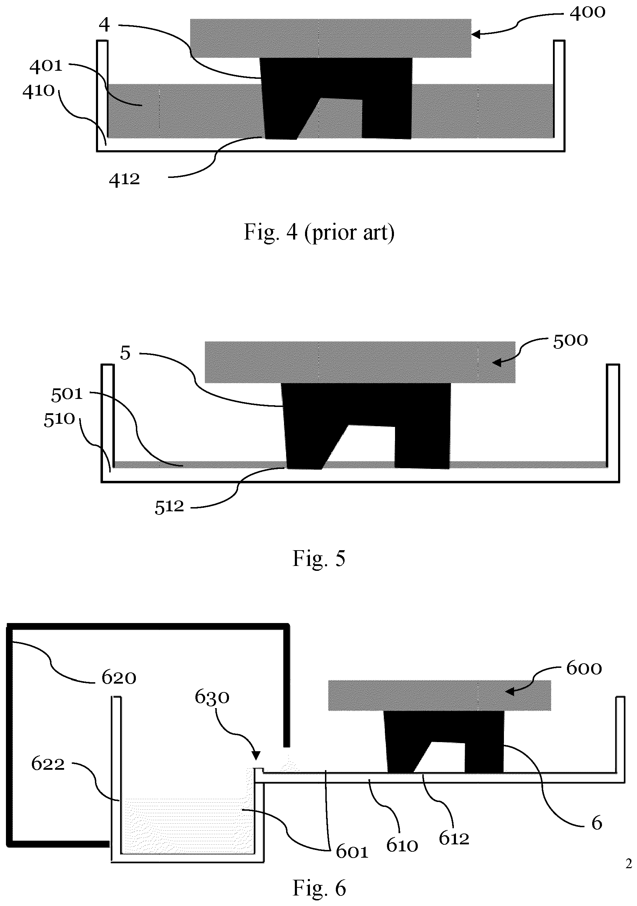

Figure 4 depicts a printing method of a three-dimensional object 4 in a common way. A build platform 400 contains the three-dimensional object 4, which is nearly completely immersed in the printing material 401 inside the printing material tank 410. A printing layer is printed on the object 4 near the bottom 412 of the printing material tank 410. Here more than half of the object is covered by the printing material.

The object 4 is built upside down and each new layer is cured by a light source (not shown) at the bottom of the tank as the build platform 400 gradually lifts the object 4 upward, exposing the newly solidified layer and submerging the next layer into the material 401, e.g., liquid resin for printing. The immersion in the printing material makes it harder to clean the object in a second printing step in another material, as all the material needs to be cleaned of the object to avoid cross contamination.

Figure 5 illustrates a printing method according to the invention. A build platform 500 contains the three-dimensional object 5, which is barely immersed in the printing material 501 inside the printing material tank 510. A printing layer is printed on the object 5 near the bottom 512 of the printing material tank 510. Here, just a small portion of the object is covered by the printing material and there is just enough printing material to print a layer. This reduces cleaning effort, only as much material as necessary to print a layer is in contact with the object. The filling level of the printing material in the material tank can be controlled by a control means to maintain a constant filling level. This could be achieved utilizing an estimation of a tank refill volume based on a volume of a printing layer. The filling level of the printing material in the material tank can be controlled by a control means to be in the range of 0.5 mm to 4 mm, preferably in the range of 1 mm to 2 mm. The filling level of the printing material in the material tank can also be controlled by a control means to be at the minimum volume necessary for printing of one layer. The control means could also comprise a non-contact fill level sensor, while the sensor might comprise an ultrasonic transducer and/or a laser. The control means could also comprise a weight sensor to e.g., utilize the mass of the printed material.

This approach has several benefits, particularly in reducing the cleaning effort needed between layers and after the completion of the print. By limiting the immersion depth, less of the object encounters the potentially viscous printing material, reducing residue and potentially decreasing the instances of imperfections caused by excess material sticking to the object. Furthermore, this method can enhance the efficiency of material use, as only the necessary amount required for each layer is in contact with the object, minimizing waste. Such a method is advantageous for manufacturing processes where post- or mid-processing cleaning efforts are desired to be minimized. Such a setup not only supports a cleaner and more efficient printing process but also contributes to sustainability by reducing material waste.

Figure 6 depicts another printing method according to the invention. A build platform 600 contains the three-dimensional object 6, which is barely immersed in the printing material 601 inside the printing material tank 610. A printing layer is printed on the object 6 near the bottom 612 of the printing material tank 610. Printing material 601 is stored in a printing material reservoir 622 from where it is transferred into the material tank 610 by a material transfer unit 620. An overflow dam 630 keeps the fill level in the tank 610 constant, as excess material is flowing over the overflow dam 630 into the reservoir 622.

Here, just a small portion of the object is covered by the printing material. This reduces cleaning effort, only as much material as necessary to print a layer is in contact with the object. This is particularly beneficial, as it ensures a steady supply of fresh material without overfilling the tank, thus maintaining the quality of each printed layer. The minimal immersion of the object in the printing material, combined with the overflow dam and recycling of the material, significantly reduces the cleaning effort, and enhances the efficiency of the process. Such a setup would be advantageous in scenarios where material consistency is important. The controlled environment also reduces the risk of contamination and ensures that only the necessary amount of material contacts the object, thus maintaining high cleanliness and accuracy. This method not only optimizes material use but also contributes to a more sustainable and cost-effective manufacturing process.

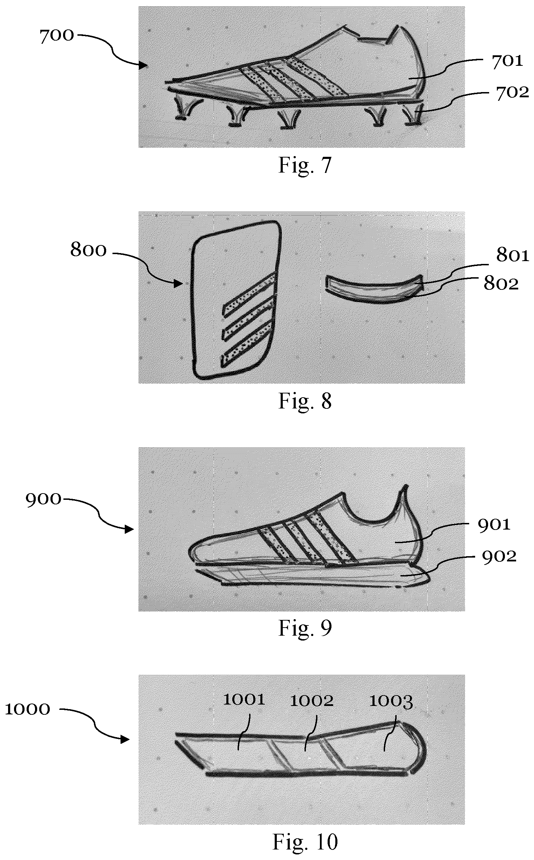

In Figure 7, a cleated shoe 700 printed with the method according to the invention is depicted. The shoe upper 701 and the cleated sole 702 are printed by different materials.

Specific design and material properties can be tailored for different sports or user preferences, providing enhanced performance characteristics such as improved shock absorption, better traction, or increased comfort.

Figure 8 depicts a shin guard 800 printed with the method according to the invention. The inner layer 801 is printed with a different material than the outer layer 802.

The inner layer 801, which is in direct contact with the wearer's skin, can be printed using a softer, more flexible material to ensure comfort and cushion against impacts. This material would ideally be lightweight and capable of conforming to the contours of the user's leg, providing a snug fit that maximizes protection while maintaining comfort. Conversely, the outer layer 802 is designed to absorb and distribute the force of impacts during sports or other activities. For this purpose, a tougher, more rigid material is used to resist punctures and scratches, ensuring that the shin guard remains effective over time under harsh usage conditions. This dual-material printing technique exemplifies the method's ability to produce complex, multi-functional sports equipment in a single, streamlined process. By integrating different material properties within the same item, the shin guard is optimized for both protection and comfort without the need for additional assembly processes.

In Figure 9, a shoe 900 printed with the method according to the invention is illustrated. The shoe upper 901 and the sole 902 are printed by different materials.

The shoe upper 901, which encases the foot, can be printed from a material that offers flexibility, breathability, and comfort. This could be a soft material that molds to the shape of the wearer's foot, providing a comfortable fit while also allowing for air circulation to keep the foot cool and dry. The sole 902, in contrast, is printed from a more durable and robust material that can withstand the abrasions and stresses of walking or running. This material needs to provide sufficient traction and support, possibly incorporating varying densities and textures to optimize grip and cushioning, enhancing the shoe's performance and longevity. This method of using different materials for different parts of the shoe showcases the advanced capabilities of the 3D printing process, allowing for extensive customization and optimization of the product. By precisely controlling the material properties, the shoe can be tailored to specific activities or user preferences, providing an excellent fit, targeted support, and optimal comfort. One of the materials might have a Shore A hardness in the range 70 to 80, have an elongation at break in the range 240 % to 360 %, and/or a tear strength in the range 20 to 30 kN/m. The other material might have a Shore D hardness in the range 68 to 74, a tensile modulus in the range 1000 MPa to 1200 MPa, and/or an elongation break higher than 50 %.

Figure 10 illustrates a sole 1000 printed with the method according to the invention. The comprises different materials, a first sole material 1001, a second sole material 1002 and a third sole material 1003.

The first sole material 1001 could be designed to provide cushioning and shock absorption, ideal for areas of the sole that bear the effect of impact during activities like walking or running. This material might be a soft, resilient polymer that compresses under pressure but quickly returns to its original shape. The second sole material 1002 might be used for its durability and wear resistance, suitable for the outer perimeter of the sole that comes into frequent contact with the ground. This could be a tougher, more abrasion-resistant material that withstands long-term use without degrading. The third sole material 1003 could be selected for its grip and traction properties, used specifically in areas of the sole that require anti-slip characteristics to ensure safety and performance on various surfaces. This method of using different materials within a single sole exemplifies the versatility and precision of advanced 3D printing techniques. It allows for the tailoring of each section of the sole according to specific functional requirements, optimizing the overall performance of the footwear. By segmenting the sole into zones with tailored material properties, the product can offer enhanced comfort, longevity, and safety, which are important for high-performance footwear.

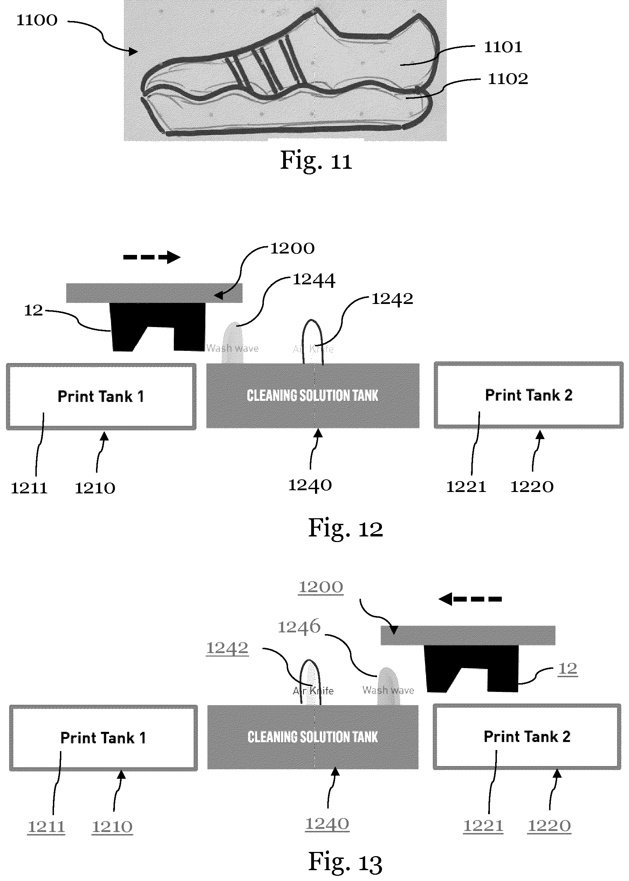

In Figure 11, a shoe 1100 printed with the method according to the invention is illustrated. The shoe upper 1101 and the sole 1102 are printed by different materials. The shoe upper 1101 and the sole 1103 are not only horizontally connected, but they are also in vertical engagement with each other.

This vertical engagement involves some form of interlocking design, where elements of the sole and the upper mesh or fit together e.g., like puzzle pieces, enhancing the strength and durability of the connection. This could be achieved through complementary ridges and grooves, snaps, or other mechanical fastenings that are directly printed into the materials. This type of connection ensures that the upper and the sole are not only adhered together but are structurally integrated, which can significantly improve the overall stability and durability of the shoe. Such a design enhances the shoe's integrity and performance by ensuring that the two parts can effectively distribute and withstand the stresses and strains experienced during wear. The integrated structure can better absorb impact, provide enhanced support, and reduce the likelihood of separation or wear at the joining point, which is often a weak spot in traditionally manufactured footwear.

Figure 12 depicts the method of printing a three-dimensional object 12 with the steps of providing a first printing material 1211 and a second printing material 1221 separated in a first material tank 1210 and a second material tank 1220; providing a build platform 1200; a first printing step of printing the object 12 at least partially onto the build platform 1200 with the first printing material 1211. A cleaning step of cleaning the object 12 is shown: After printing the object 12 partially on the build platform 1200, the build platform 1200 with the object 12 moves to the right in the direction of the second material tank 1220. On its way it passes the cleaning solution tank 1240, which comprises a first standing wash wave 1244 of cleaning solution and an air knife 1242. In this embodiment, the at least one cleaning tank is arranged between the printing material tanks.

The standing wash wave 1244 serves to effectively remove any residual first printing material or debris from the object 12, ensuring a clean surface for the next layer of material application. The air knife 1242 is positioned to dry the object by blowing off any remaining cleaning solution, preparing it for further processing. This method integrates cleaning directly into the printing line and enhances the quality of the printed object by ensuring clean material layers without contamination from previous steps. Such a setup could be extremely beneficial in high-precision manufacturing environments where material purity and layer adherence are critical.

Figure 13 shows a subsequent step of printing the three-dimensional object 12 of Figure 12: After the A cleaning step of cleaning the object 12 is shown: After a second printing step of printing the object 12 at least partially onto the build platform 1200 with the second printing material 1221 from the second material tank 1220, the build platform 1200 with the object 12 is moved to the left. The build platform 1200 with the object 12 passes the cleaning solution tank 1240, which comprises a second standing wash wave 1246 of cleaning solution and an air knife 1242.

As the build platform 1200 moves, it passes again the cleaning solution tank 1240. This time, the object 12 is subjected to a second standing wash wave 1246 of cleaning solution designed to remove any excess or particles of the second printing material, ensuring that the surface of the object remains clean and prepared for any further processing steps. The air knife 1242, consistent with the first cleaning step of figure 12, is used once more to quickly dry the object, removing any remaining liquid or particles of the cleaning solution.

This sequential and systematic cleaning and drying process embedded within the material printing workflow enhances the consistency and reliability of the printing process.

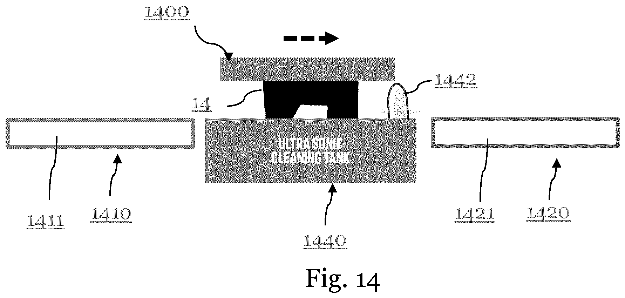

Figure 14 illustrates the method of printing a three-dimensional object 14 with the steps of providing a first printing material 1411 and a second printing material 1421 separated in a first material tank 1410 and a second material tank 1420; providing a build platform 1400; a first printing step of printing the object 14 at least partially onto the build platform 1400 with the first printing material 1411. A cleaning step of cleaning the object 14 is shown: After printing the object 14 partially on the build platform 1400, the build platform 1400 with the object 14 moves to the right in the direction of the second material tank 1420. On its way it passes the ultrasonic cleaning tank 1440, which comprises an air knife 1442. The platform 1400 is moved vertically into the ultrasonic cleaning tank 1440, so that the object 14 is immerged in the cleaning solution inside the ultrasonic cleaning tank. After an ultrasonic cleaning step, the platform 1400 is moved upwards, so that the object 14 emerges from the ultrasonic cleaning tank 1440. Afterwards the platform 1400 is moved to the right in the direction of the second printing material tank 1420. On its way it passes the air knife 1442.

The build platform 1400, carrying the partially printed object 14, moves to the right towards the second material tank 1420 for subsequent printing. During this transition, the platform passes through the ultrasonic cleaning tank 1440 equipped with an air knife 1442. The platform 1400 lowers the object 14 into the ultrasonic cleaning tank, immersing it in a cleaning solution. Ultrasonic cleaning uses high-frequency sound waves to agitate the fluid, which generates micro-cavitation bubbles. These bubbles effectively remove any debris, residual printing material, or contaminants from the object's surface, providing a deep clean that is highly effective for intricate designs and complex geometries. After the ultrasonic cleaning process is completed, the build platform 1400 is raised, lifting the object 14 out of the cleaning solution. As the platform continues its movement towards the second material tank, it passes under the air knife 1442. The air knife directs a high-velocity stream of air onto the object, effectively drying it by removing any remaining moisture or cleaning fluid residues. This step is crucial as it prepares the object's surface for the application of the second printing material, ensuring that subsequent layers adhere properly. In this embodiment, the build platform is vertically and horizontally movable. Such a feature of a vertically and horizontally movable platform could also be realized by a Stewart platform.In the following, further inventive examples of the present disclosure are listed:
1. A method of printing a three-dimensional object, comprising at least the steps:
   providing at least a first and a second printing material separated in at least a first and a second material tank;
   providing a build platform;
   a first printing step of printing the object at least partially onto the build platform with the first printing material;
   a cleaning step of cleaning the object from the first and/or second printing material; and
   a second printing step of printing the object at least partially onto the build platform with the second printing material.
2. The method according to example 1, wherein the cleaning step comprises at least the steps:
   providing one or more cleaning tanks with a cleaning solution;
   providing one or more air knifes; and
   providing one or more standing waves of cleaning solution;
   cleaning the object by exposing it to the one or more standing waves of cleaning solution; and
   drying the cleaned object by exposing it to the one or more air knifes.
3. The method according to example 1, wherein the cleaning step comprises at least the steps:
   providing one or more cleaning tanks with a cleaning solution, wherein at least one of the cleaning tanks is an ultrasonic cleaning tank, configured and dedicated for ultrasonic cleaning; and
   providing one or more air knifes;
   cleaning the object by immerging the object into the ultrasonic cleaning tank; and
   drying the cleaned object by exposing it to the one or more air knifes.
4. The method according to one of the preceding examples, where at least one of the material tanks and/or at least one of the cleaning tanks is horizontally movable.
5. The method according to one of the preceding examples, wherein the tanks are arranged on a rotatable disk.
6. The method according to one of the examples 2-5, where at least one cleaning tank is arranged between the printing material tanks.
7. The method according to one of the preceding examples, wherein the build platform is vertically and horizontally movable.
8. The method according to the preceding example 7, wherein the build platform comprises a Stewart platform.
9. The method according to one of the preceding examples, wherein at least one of the printing materials is a liquid photopolymer resin.
10. The method according to one of the preceding examples, wherein the printing utilizes Digital Light Processing (DLP).
11. The method according to one of the preceding examples, wherein the printing is carried out by photopolymerization.
12. The method according to example 11, wherein the photopolymerization is enabled by UV light.
13. The method according to one of the preceding examples, wherein the first and the second printing materials differ in their mechanical properties.
14. The method according to the preceding example 13, wherein the first material has a Shore A hardness in the range 70 to 80.
15. The method according to any one of the preceding examples 13 to 14, wherein the first material has an elongation at break in the range 240 % to 360 %.
16. The method according to any one of the preceding examples 13 to 15, wherein the first material has a tear strength in the range 20 to 30 kN/m.
17. The method according to any one of the preceding examples 13 to 14, wherein the second material has a Shore D hardness in the range 68 to 74.
18. The method according to any one of the preceding examples 13 to 17, wherein the second material has tensile modulus in the range 1000 MPa to 1200 MPa.
19. The method according to any one of the preceding examples 13 to 18, wherein the second material has an elongation at break higher than 50 %.
20. The method according to one of the preceding examples, wherein the filling level of the printing material in the material tank is controlled by a control means to maintain a constant filling level.
21. The method according to example 20, wherein the method comprises an estimation of a tank refill volume based on a volume of a printing layer.
22. The method according to examples 20 or 21, wherein the filling level of the printing material in the material tank is controlled by a control means to be in the range of 0.5 mm to 4 mm, preferably in the range of 1 mm to 2 mm.
23. The method according to one of the examples 20 to 22, wherein the filling level of the printing material in the material tank is controlled by a control means to be at the minimum volume necessary for printing of one layer.
24. The method according to one of the examples 20 to 23, wherein the control means comprises an overflow dam.
25. The method according to one of the examples 20 to 24, wherein the control means comprises a non-contact fill level sensor, the sensor comprising an ultrasonic transducer and/or a laser.
26. The method according to one of the examples 20 to 25, wherein the control means comprises a weight sensor.
27. Sports article manufactured according to a method of one of the preceding examples.

### Reference list:

1, 2, 4, 5, 6, 12, 14: three-dimensional object
100, 200, 300, 400, 500, 600, 1200, 1400: build platform
10, 310, 1210, 1410: first material tank
11, 1211, 1411: first printing material
20, 320, 1220, 1420: second material tank
21, 1221, 1421: second printing material
30: printing container
302: rotatable disk
330: third material tank
340, 1240: cleaning tank
401, 501, 601: printing material
410, 510, 610: printing material tank
412, 512, 612: bottom
620: transfer unit
622: material reservoir
630: overflow dam
700: cleated shoe
701: shoe upper
702: cleated sole
800: shin guard
801: inner layer
802: outer layer
900: shoe
901: shoe upper
902: sole
1000: sole
1001: first sole material
1002: second sole material
1003: third sole material
1100: shoe
1101: shoe upper
1102: sole
1242, 1442: air knife
1244: first wash wave
1246: second wash wave
1440: ultrasonic cleaning tank

## Claims

1. A method of printing a three-dimensional object, comprising at least the steps:
providing at least a first and a second printing material separated in at least a first and a second material tank;
providing a build platform;
a first printing step of printing the object at least partially onto the build platform with the first printing material;
a cleaning step of cleaning the object from the first and/or second printing material; and
a second printing step of printing the object at least partially onto the build platform with the second printing material.

2. The method according to claim 1, wherein the cleaning step comprises at least the steps:
providing one or more cleaning tanks with a cleaning solution;
providing one or more air knifes; and
providing one or more standing waves of cleaning solution;
cleaning the object by exposing it to the one or more standing waves of cleaning solution; and
drying the cleaned object by exposing it to the one or more air knifes.

3. The method according to claim 1, wherein the cleaning step comprises at least the steps:
providing one or more cleaning tanks with a cleaning solution, wherein at least one of the cleaning tanks is an ultrasonic cleaning tank, configured and dedicated for ultrasonic cleaning; and
providing one or more air knifes;
cleaning the object by immerging the object into the ultrasonic cleaning tank; and
drying the cleaned object by exposing it to the one or more air knifes.

4. The method according to one of the preceding claims, where at least one of the material tanks and/or at least one of the cleaning tanks is horizontally movable.

5. The method according to one of the claims 2-4, where at least one cleaning tank is arranged between the printing material tanks.

6. The method according to one of the preceding claims, wherein the build platform is vertically and horizontally movable.

7. The method according to the preceding claim 6, wherein the build platform comprises a Stewart platform.

8. The method according to one of the preceding claims, wherein the first and the second printing materials differ in their mechanical properties.

9. The method according to one of the preceding claims, wherein the filling level of the printing material in the material tank is controlled by a control means to maintain a constant filling level.

10. The method according to claim 9, wherein the method comprises an estimation of a tank refill volume based on a volume of a printing layer.

11. The method according to claims 9 or 10, wherein the filling level of the printing material in the material tank is controlled by a control means to be in the range of 0.5 mm to 4 mm, preferably in the range of 1 mm to 2 mm.

12. The method according to one of the claims 9 to 11, wherein the filling level of the printing material in the material tank is controlled by a control means to be at the minimum volume necessary for printing of one layer.

13. The method according to one of the claims 9 to 12, wherein the control means comprises an overflow dam.

14. The method according to one of the claims 9 to 13, wherein the control means comprises a non-contact fill level sensor, the sensor comprising an ultrasonic transducer and/or a laser.

15. The method according to one of the claims 9 to 14, wherein the control means comprises a weight sensor.
